# FASCICULE DE BREVET EUROPEEN

(11) **EP 0 884 823 B1**
(45) Date de publication et mention de la délivrance du brevet: **11.09.2002**
(21) Numéro de dépôt: 98110446.6
(22) Date de dépôt: 08.06.1998
(51) Int. Cl.: H02K 1/02, H02K 33/16

(54) **Dispositif d'entraînement électromagnétique à aimant permanent mobile**
Elektromagnetische Antriebsvorrichtung mit beweglichem Permanentmagnet
Electromagnetical drive apparatus with moving permanent magnet

(30) Priorité: 13.06.1997 FR 9707335
(43) Date de publication de la demande: 16.12.1998
(73) Titulaire: MMT S.A., 1700 Fribourg (CH)
(72) Inventeur: Oudet, Claude, 25000 Besançon (FR)
(74) Mandataire: Reuteler, Raymond Werner

(56) Documents cités:
- EP-A- 0 310 223
- EP-A- 0 364 026
- US-A- 5 334 893
- DUANE C. HANSELMAN: "BRUSHLESS PERMANENT-MAGNET MOTOR DESIGN" 1994 , MAC GRAW-HILL XP002051455 * page 30 - page 39 *
- SCHÜLER BRINKMANN: "DAUERMAGNETE" 1970 , SPRINGER VERLAG , BERLIN XP002051456 * page 18 - page 19 *

## Description

La présente invention concerne un dispositif d'entraînement électromagnétique comportant une structure statorique et un organe mobile comprenant une ou plusieurs parties aimantées perpendiculairement à la direction de leur déplacement, la ou les parties aimantées étant réalisées en un matériau ayant une perméabilité réversible proche de celle de l'air et présentant dans tout le domaine de travail du dispositif d'entraînement une caractéristique de désaimantation pratiquement linéaire et une droite de recul pratiquement confondue avec cette caractéristique, la structure statorique comprenant au moins une première partie de circuit magnétique réalisée en un matériau de haute perméabilité magnétique, cette partie ou ces parties de circuit présentant, chacune, deux parties polaires, la structure statorique comprenant en outre au moins une bobine électrique d'excitation couplée avec une première partie de circuit magnétique, l'organe mobile ou la structure statorique comprenant au moins une seconde partie de circuit magnétique réalisée en un matériau de haute perméabilité magnétique et agencée de façon à former avec chacune desdites parties polaires un entrefer, tous ces entrefers étant de même longueur, sensiblement constante, mesurée perpendiculairement aux surfaces des parties polaires, l'ensemble desdites première et seconde parties de circuit formant un ou plusieurs circuits magnétiques fermés, le dispositif d'entraînement étant agencé de façon à permettre le déplacement de la ou des parties aimantées à travers lesdits entrefers, ces parties aimantées ayant, chacune, une longueur mesurée dans le sens de l'aimantation, sensiblement constante, inférieure à la longueur de chaque entrefer de la grandeur du jeu mécanique nécessaire pour permettre le déplacement de l'organe mobile à travers lesdits entrefers, chaque partie aimantée de l'organe mobile ayant une largeur n'excédant pas la somme de la largeur d'une partie polaire et de la largeur de l'espace entre deux parties polaires d'un même circuit magnétique, toutes ces largeurs étant mesurées dans le sens dudit déplacement.

Les dispositifs d'entraînement de ce type qui peuvent être rotatifs ou linéaires, permettent notamment de fournir, sur une course relativement grande de l'organe mobile, un couple ou une force constants pour une valeur donnée des ampères-tours de la bobine d'excitation, ce couple ou cette force étant proportionnels aux ampères-tours. Ils peuvent ainsi être utilisés avantageusement comme actionneurs à commande directe, de tels actionneurs étant plus fiables que ceux formés par des moteurs à courant continu avec réducteur. Ils peuvent également être utilisés, par exemple, comme moteur rotatif polyphasé fournissant, par phase, à courant continu, une loi de couple trapézoïdale.

Un inconvénient de ces dispositifs réside dans le coût des matériaux magnétiques à haute énergie, tels qu'ils sont généralement nécessaires pour atteindre les performances demandées, en particulier en ce qui concerne la force ou le couple à fournir.

Un autre inconvénient est le fait que pour atteindre des forces ou couples suffisants, l'organe mobile est muni d'aimants élémentaires de polarités alternantes, ce qui nécessite une aimantation avant l'assemblage du dispositif et implique des manipulations délicates, vu la puissance et la fragilité des aimants utilisés. De ce fait, et en particulier dans une fabrication en grande série, on ne peut pas totalement exclure le risque qu'une particule d'aimant ne subsiste à l'intérieur du dispositif et se loge dans l'entrefer d'un circuit magnétique, ce qui entraînerait, bien entendu, un défaut du dispositif.

Le document EP-A-0364026 divulgue un dispositif d'entraînement électromagnétique comportant une structure statorique et un organe mobile comprenant une partie aimantée perpendiculairement à sa direction de déplacement. Le stator comprend une première partie couplée à deux bobines et formant deux parties polaires ainsi qu'une seconde partie agencée pour former deux entrefers de longueur constante avec les parties polaires. La partie aimantée, d'épaisseur inférieure à la largeur de l'entrefer, se déplace à l'intérieur de ceux-ci. La largeur de la partie aimantée mesurée dans le sens du déplacement n'excède pas la somme de la largeur d'une des parties polaires et de l'espace entre deux parties polaires.

Le document EP-A-0310223 divulgue un aimant ferritique ayant une caractéristique linéaire jusque dans le troisième quadrant.

L'invention a comme premier but de remédier aux inconvénients susmentionnés, tout en fournissant un dispositif d'actionnement dont les performances sont comparables à celles des dispositifs existants.

A cet effet, le dispositif d'entraînement électromagnétique selon l'invention est caractérisé en ce que, dans le cas où l'organe mobile comporte plus d'une partie aimantée, toutes les parties aimantées de l'organe mobile sont aimantées dans le même sens, que le matériau de la ou des parties aimantées possède une caractéristique de désaimantation pratiquement linéaire jusqu'à des températures au moins égales à 100° C et au moins jusqu'à une valeur négative de l'induction magnétique sensiblement égale, en valeur absolue, à 0,5 fois l'induction rémanente dudit matériau, et que le ou lesdits circuits magnétiques et la ou les parties aimantées sont dimensionnés de façon que le point de fonctionnement moyen de chaque partie aimantée, en absence de courant dans la ou les bobines, se situe à une valeur de l'induction inférieure à 0,5 fois la valeur de l'induction rémanente dudit matériau magnétique.

Un organe mobile dont les parties aimantées sont toutes orientées dans le même sens signifie, par rapport au cas habituel où des parties aimantées de polarités alternantes sont disposées dans lesdits entrefers, toutes dimensions égales, une réduction de moitié du volume des parties aimantées, puisque le nombre de ces parties n'est alors que la moitié du nombre d'entrefers. La réduction du volume d'aimant, et donc du coût du matériau utilisé, correspond également à une réduction de la masse de l'organe mobile, ce qui est un avantage important, notamment lorsque de fortes accélérations sont exigées. Une telle structure de l'organe mobile permet en outre d'effectuer l'aimantation après l'assemblage du dispositif.

La réduction du volume d'aimant entraîne toutefois également une réduction correspondante de la force ou du couple fournis pour un nombre d'ampères-tours donné, si les autres paramètres du dispositif restent les mêmes.

Pour compenser, au moins en grande partie, la perte en force ou en couple, l'invention utilise un matériau d'aimant approprié, d'une manière inédite, de façon à permettre une forte augmentation des ampères-tours applicables et une large variation de l'induction.

En effet, dans les dispositifs d'entraînement du présent type, l'excursion du point de fonctionnement de l'aimant sur la caractéristique de désaimantation B(H) est limitée, d'une part, par l'induction maximale acceptable pour éviter une saturation du matériau formant le circuit magnétique ou une diminution sensible de sa perméabilité et, d'autre part, par la valeur minimale négative du champ magnétique permettant d'éviter le risque de désaimantation de l'aimant.

Le développement des matériaux d'aimants à grande énergie, dans le but d'augmenter le champ coercitif intransèque de ces aimants à la température ambiante, a notamment conduit à des aimants du type NdFeB ayant des caractéristiques B(H) dans lesquelles un coude n'apparaît dans le deuxième cadran qu'à des températures très élevées dépassant, par exemple, 215° C. En travaillant à des températures inférieures, la partie linéaire de la caractéristique de désaimantation s'avère s'étendre jusque dans le troisième cadran, notamment jusqu'à des valeurs négatives de l'induction pouvant dépasser, en valeur absolue, 0,5 fois l'induction rémanente du matériau à des températures au moins égales à 100° C.

Dans ces conditions, le dimensionnement selon l'invention, par lequel le point de fonctionnement moyen de l'aimant se situe à une valeur de l'induction de moins de la moitié de l'induction rémanente, permet d'utiliser le dispositif dans un domaine de variation de l'induction très large et jusqu'ici totalement inusité. Un tel dispositif permet d'atteindre des forces ou couples au moins comparables à ceux des dispositifs usuels qui nécessitent un volume d'aimant beaucoup plus grand.

Dans une forme d'exécution particulière, le présent dispositif d'entraînement peut comporter un organe mobile rotatif, à course limitée, monté sur un axe logé dans la structure statorique, cet organe mobile comprenant une partie aimantée dont la forme est essentiellement celle d'une portion de disque plat annulaire et qui est disposée dans un plan perpendiculaire à l'axe de rotation de l'organe mobile, la structure statorique comportant au moins une partie de circuit magnétique en forme de U dont les extrémités forment des parties polaires. Dans une telle forme d'exécution, le dispositif selon l'invention est avantageusement caractérisé en ce que lesdites parties polaires présentent deux bords respectifs en regard l'un de l'autre, parallèles entre eux et parallèles à un plan axial, la partie aimantée ayant, dans le sens de la rotation, deux extrémités dont les bords respectifs coïncident essentiellement, dans les positions extrêmes correspondantes de la partie mobile, avec les bords respectifs desdites parties polaires.

Dans une autre forme d'exécution, le présent dispositif d'entraînement peut comporter un organe mobile rotatif monté sur un axe logé dans la structure statorique, cet organe mobile comprenant au moins une partie aimantée dont la forme est essentiellement celle d'une portion de disque plat annulaire et qui est disposée dans un plan perpendiculaire à l'axe de rotation de l'organe mobile, la structure statorique comportant au moins deux parties de circuit magnétique en forme de U, disposées d'un même côté du plan de la partie aimantée. Dans une telle forme d'exécution, le dispositif selon l'invention est avantageusement caractérisé en ce que deux branches voisines desdites deux parties de circuit en forme de U sont couplées avec une même bobine électrique d'excitation, les extrémités de ces branches voisines étant réunies par une même partie polaire. Lesdites parties en forme de U sont de préférence constituées par des paquets de tôles en forme de U.

Dans une forme d'exécution particulière du présent dispositif d'entraînement, un courant de polarisation permanent est appliqué à ladite ou auxdites bobines, de façon à régler le point de fonctionnement moyen de la ou des parties aimantées à une valeur de l'induction au moins approximativement égale à zéro. Dans un tel cas, la force ou le couple correspondant aux ampères-tours de polarisation peuvent être compensés par exemple par un ressort.

Un réglage selon lequel l'induction moyenne est approximativement égale à zéro, est particulièrement utile dans le cas d'actionneurs linéaires ou angulaires devant fonctionner à des fréquences élevées. D'une façon générale, la réduction de l'induction moyenne, telle qu'elle est préconisée par l'invention, permet notamment de réduire les efforts mécaniques parasites et les pertes magnétiques. Dans le cas de dispositifs d'entraînement rotatifs à entrefer axial, par exemple, les efforts axiaux variant avec le carré de l'induction, le frottement et l'usure des paliers se trouvent sensiblement réduits. Dans le cas où les parties aimantées sont fixées sur une culasse mobile et sont dès lors fortement attirées par les parties polaires du stator, de sorte qu'un effort important s'exerce sur la butée axiale, la réduction de l'induction moyenne est particulièrement avantageuse.

D'autres caractéristiques, avantages et buts de l'invention ressortiront de la description donnée ci-dessous, à titre d'exemple, de différentes formes de réalisation de dispositifs d'actionnement illustrées dans les dessins annexés dans lesquels:
La Fig. 1 est une vue en coupe, selon la ligne I-I de la Fig. 2, montrant un actionneur rotatif à course limitée, conforme à l'invention, cet actionneur comportant une seule partie aimantée;
La Fig. 2 est une vue en plan selon la ligne II-II de la Fig. 1;
La Fig. 3 est une vue en coupe, selon la ligne III-III de la Fig. 4, montrant un autre actionneur à course limitée, conforme à l'invention, cet actionneur comportant trois parties aimantées;
La Fig. 4 est une vue en plan, selon la ligne IV-IV de la Fig. 3; et
La Fig. 5 est une vue en coupe partielle, selon la ligne V-V de la Fig. 4.

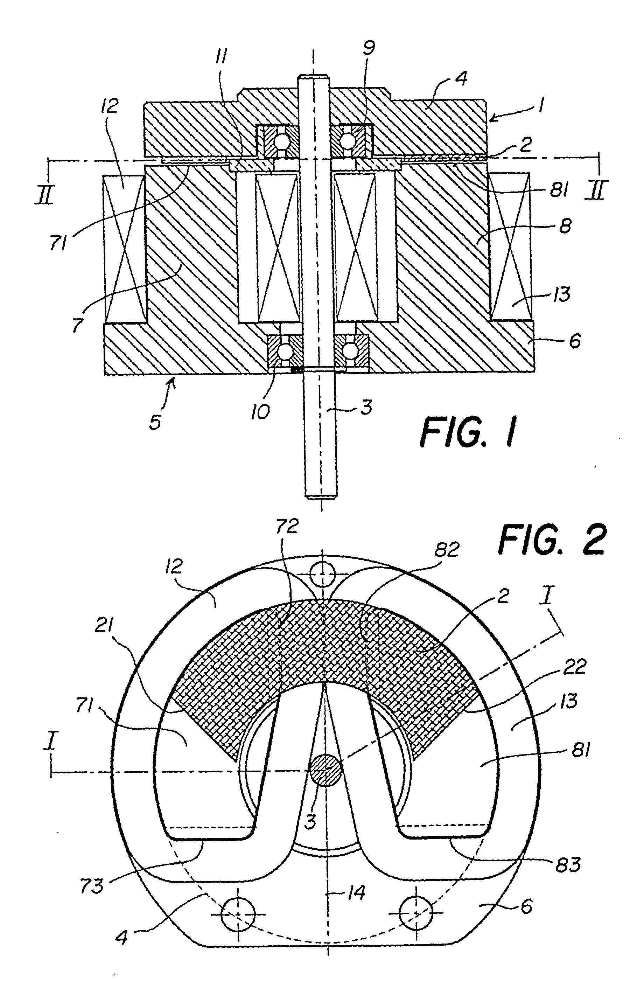

Les Figures 1 et 2 représentent un dispositif d'entraînement selon l'invention sous forme d'un actionneur rotatif à course limitée, comportant une seule partie aimantée. Dans cet exemple, un organe mobile 1 porte une partie aimantée 2 ayant la forme d'une portion d'un disque plan annulaire, de faible épaisseur par rapport à ses autres dimensions, cette partie 2 étant aimantée parallèlement à l'axe de rotation 3 du dispositif d'entraînement.

L'organe mobile 1 comporte une culasse 4 en un matériau de haute perméabilité magnétique, par exemple en fer doux fritté, la partie aimantée 2 étant collée sur une surface plane de cette culasse. L'ensemble de l'organe rotatif 1 est chassé sur l'axe 3.

L'ensemble statorique de ce dispositif comporte une partie de circuit magnétique fixe 5, présentant une partie de base 6 et deux parties de noyau 7 et 8 dont les extrémités libres forment des parties polaires respectives 71 et 81. Ces parties polaires constituent, avec la culasse 4, deux entrefers respectifs de même longueur, constante, mesurée perpendiculairement aux faces de ces parties polaires. La longueur de la partie aimantée 2, mesurée dans le même sens, est légèrement inférieure à la longueur de ces entrefers, la différence entre la longueur de l'entrefer et la longueur de la partie aimantée correspondant au jeu mécanique nécessaire pour le mouvement de l'organe mobile par rapport à l'ensemble statorique.

L'ensemble statorique comporte deux paliers 9 et 10 pour l'axe 3, ces paliers étant fixés, directement ou par l'intermédiaire d'une pièce de montage 11, sur la partie 5, comme le montre la Fig. 1.

Deux bobines électriques 12 et 13 sont placées, respectivement, autour des parties de noyau 7 et 8, le sens du bobinage et du courant d'excitation qui les parcourt étant tel que des polarités différentes apparaissent sur les parties polaires 71 et 81. L'interaction de ces pôles avec la partie aimantée fournit le couple de l'actionneur dans l'une ou l'autre direction de rotation selon le sens du courant, la course de l'organe mobile étant limitée par des moyens non représentés, et s'étend dans le présent dispositif sur un angle maximal de 90°.

La forme des bobines 12 et 13 et la forme de la partie aimantée 2, qui constituent une particularité importante du présent dispositif, sont visibles à la Fig. 2, cette figure représentant la partie aimantée dans une position intermédiaire, soit à mi-course entre les positions extrêmes. Il est à remarquer notamment que les bords en regard 72 et 82 des parties polaires 71 et 81 sont parallèles entre eux et parallèles au plan de symétrie axiale 14, dans la zone de passage de la partie aimantée 2. La partie aimantée présente elle-même des bords 21 et 22 qui sont inclinés par rapport à la direction radiale, de telle façon que dans les positions extrêmes de l'organe mobile, ces bords coïncident ou sont très voisins respectivement des bords 72 et 82. Les bords de l'autre extrémité coïncident alors ou sont très voisins des bords 83 et 73 des parties polaires respectives 81 et 71. L'agencement ainsi défini permet de réduire au minimum la surface et donc le volume de la partie aimantée dans une telle structure, tous les autres paramètres restant les mêmes.

La culasse 4 ferme le circuit magnétique de ce dispositif et sa largeur, dans le sens du déplacement, doit être au moins égale à la largeur de la partie aimantée augmentée de chaque côté de la largeur d'une partie polaire de la structure statorique - ce qui correspond en l'occurrence à un arc peu inférieur à 2 π fois le rayon moyen de la partie aimantée. Dans le présent exemple, la culasse 4 a donc une forme circulaire indiquée en partie en traits interrompus à la Fig. 2.

A titre d'exemple quantitatif, avec une longueur d'aimant de 1 mm et un jeu de 0,4 mm entre la partie aimantée et une partie polaire de la structure statorique, et avec un aimant du type utilisé dans le cadre de la présente invention dont l'induction rémanente est par exemple de 0,85 T à une température d'environ 140° C, le point de fonctionnement moyen de la partie aimantée se situe à une valeur de l'induction de 0,3 T. Avec 1300 ampères-tours par bobine, la variation du point de fonctionnement d'une position extrême de l'organe mobile à l'autre - la partie aimantée se trouvant dans ces positions extrêmes totalement en face de l'une ou de l'autre partie polaire -, est alors de ± 1,17 T. Dans ce cas, les valeurs limites de l'induction sont, respectivement, peu supérieure à la valeur correspondant au coude de la caractéristique B(H) du matériau d'aimant, et peu inférieure à l'induction maximale acceptable dans un fer fritté économique.

Il est à noter que le potentiel appliqué au circuit fermé comportant les deux entrefers en série est de 2600 ampères-tours, soit quatre fois le potentiel de la seule partie aimantée incluse dans ce circuit pour une position extrême de l'organe mobile, ce potentiel étant d'environ 650 ampères-tours. Une telle disproportion est totalement inusitée dans le domaine des actionneurs à aimant mobile. En comparaison, avec des dispositifs connus utilisant deux parties aimantées adjacentes de signes contraires, le point de fonctionnement moyen correspondrait à une induction de 0,6 T et les ampères-tours maximum admissibles seraient de 970 ampères-tours par entrefer. Le rapport des potentiels susmentionnés devient dans ce cas égal à environ 1,5 au lieu de 4 dans le dispositif selon l'invention. Le couple du dispositif conventionnel serait accru de 50%, mais pour une masse d'aimant à peu près triplée. La solution selon l'invention est donc nettement plus économique, indépendamment du fait qu'elle permet une aimantation à l'état assemblé du dispositif et procure les autres avantages déjà mentionnés.

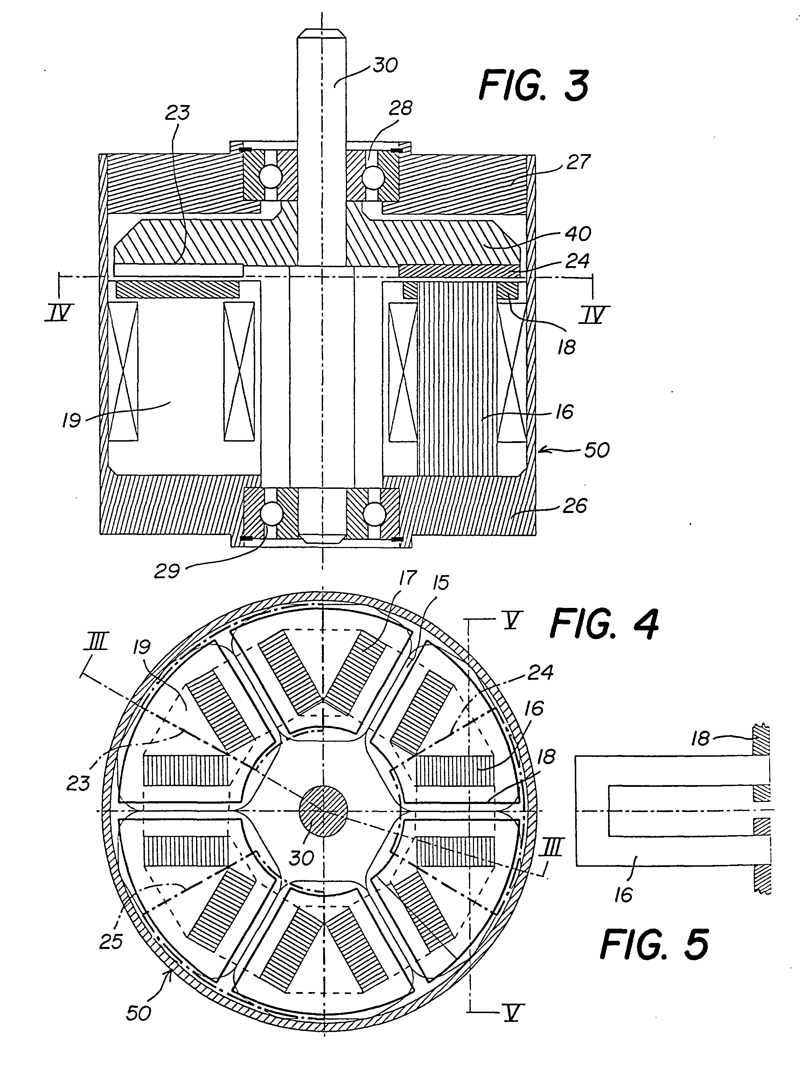

Les Figures 3 à 5 illustrent une autre forme de réalisation d'un dispositif d'entraînement selon l'invention. Il s'agit d'un actionneur rotatif, par exemple également à course limitée, dont l'organe mobile comporte trois parties aimantées 23, 24, 25, dont l'aimentation est orientée dans le même sens parallèlement à l'axe de rotation. Ces parties aimantées ont ici la forme de secteurs annulaires et, comme dans l'exemple précédent, elles sont fixées, par exemple par collage, sur une culasse 40 fermant le circuit magnétique dont les premières parties sont formées dans une structure statorique 50.

La particularité de la construction selon les Figures 3 à 5 réside dans la réalisation des parties de circuit magnétique du stator et de leur couplage avec les bobines d'excitation. Comme on le voit notamment aux Figures 4 et 5, chaque bobine, telle que la bobine 15, est couplée avec deux parties de circuit magnétique en forme de U, telles que 16 et 17. La bobine 15 entoure ainsi deux branches voisines de ces circuits qui peuvent avantageusement être réalisées sous forme de paquets de tôles en forme de U. Dans le présent exemple, six bobines sont ainsi couplées avec six parties de circuit magnétique disposées selon la vue de dessus de la Fig. 4. Les extrémités des branches entourées par une même bobine sont réunies par une pièce polaire respective, telle que la pièce polaire 18.

Les dispositifs selon la présente invention ne nécessitant pas de sections de fer très importantes, la structure selon les Figures 3 à 5 constitue une solution très intéressante notamment du point de vue du prix de revient et de la fabrication. L'espace entre les branches de circuit magnétique entourées par une même bobine, tel que l'espace 19, peut être rempli de résine et l'ensemble peut être logé dans un boîtier 26, 27 en un matériau magnétique ou non-magnétique dans lequel sont fixés des paliers 28, 29 pour l'axe d'entraînement 30.

Dans toutes les formes d'exécution, le dispositif d'entraînement selon l'invention permet d'aimanter les parties correspondantes de l'organe mobile une fois que l'ensemble stator et l'organe mobile est assemblé. A cet effet, on peut placer le dispositif dans un inducteur et effectuer l'aimantation, de préférence à une température située entre 100 et 150° C.

Les dispositifs selon l'invention peuvent être utilisés comme actionneurs linéaires ou angulaires à course limitée pour fournir sur cette course un couple pratiquement constant, ou encore comme moteurs rotatifs polyphasés. Ils se distinguent par leur construction économique et leur fiabilité. Ils permettent, dans les conditions exposées ci-dessus, d'obtenir des couples comparables à ceux des dispositifs usuels et d'assurer le fonctionnement à des températures même sensiblement supérieures à 100° C. Dans la pratique, on pourra adapter le dimensionnement de la partie aimantée, qui est en un matériau cher, aux ampères-tours crêtes et à la qualité du matériau perméable utilisé, rechercher éventuellement dans le même encombrement une construction optimale de la ou des bobines et dimensionner ainsi l'ensemble du dispositif de façon optimale en fonction de son utilisation spécifique.

## Revendications

1. Dispositif d'entraînement électromagnétique comportant une structure statorique (5) et un organe mobile (1) comprenant une ou plusieurs parties (2) aimantées perpendiculairement à la direction de leur déplacement, la ou les parties aimantées (2) étant réalisées en un matériau ayant une perméabilité réversible proche de celle de l'air et présentant dans tout le domaine de travail du dispositif d'entraînement une caractéristique de désaimantation pratiquement linéaire et une droite de recul pratiquement confondue avec cette caractéristique, la structure statorique (5) comprenant au moins une première partie de circuit magnétique (6, 7, 8) réalisée en un matériau de haute perméabilité magnétique, cette première partie ou ces premières parties de circuit présentant, chacune, deux parties polaires (71, 81), la structure statorique (5) comprenant en outre au moins une bobine électrique d'excitation (12) couplée avec une première partie de circuit magnétique, l'organe mobile (1) ou la structure statorique (5) comprenant au moins une seconde partie de circuit magnétique (4) réalisée en un matériau de haute perméabilité magnétique et agencée de façon à former avec chacune desdites parties polaires (71, 81) un entrefer, tous ces entrefers étant de même longueur, sensiblement constante, mesurée perpendiculairement aux surfaces des parties polaires, l'ensemble desdites première et seconde parties de circuit formant un ou plusieurs circuits magnétiques fermés, le dispositif d'entraînement étant agencé de façon à permettre le déplacement de la ou des parties aimantées (2) à travers lesdits entrefers, ces parties aimantées (2) ayant, chacune, une longueur mesurée dans le sens de l'aimantation, sensiblement constante, inférieure à la longueur de chaque entrefer de la grandeur du jeu mécanique pour permettre le déplacement de l'organe mobile, chaque partie aimantée de l'organe mobile ayant une largeur n'excédant pas la somme de la largeur d'une partie polaire et de la largeur de l'espace entre deux parties polaires d'un même circuit magnétique, toutes ces largeurs étant mesurées dans le sens dudit déplacement, **caractérisé en ce que** toutes les parties aimantées de l'organe mobile sont aimantées dans le même sens, que le matériau de la ou des parties aimantées possède une caractéristique de désaimantation pratiquement linéaire, jusqu'à des températures au moins égales à 100° C et au moins jusqu'à une valeur négative de l'induction magnétique sensiblement égale, en valeur absolue, à 0,5 fois l'induction rémanente dudit matériau, et que le ou lesdits circuits magnétiques et la ou les parties aimantées sont dimensionnés de façon que le point de fonctionnement moyen de chaque partie aimantée, en absence de courant dans la ou les bobines, se situe à une valeur de l'induction inférieure à 0,5 fois la valeur de l'induction rémanente.

2. Dispositif d'entraînement selon la revendication 1, **caractérisé en ce que** l'organe mobile est rotatif, à course limitée et monté sur un axe (3) logé dans la structure statorique (5), la partie aimantée (2) de l'organe mobile (1) ayant essentiellement la forme d'une portion de disque plat annulaire et étant disposée dans un plan perpendiculaire à l'axe de rotation (3) de l'organe mobile, la ou les premières parties de circuit magnétique sont en forme de U (6, 7, 8) dont les extrémités forment des parties polaires (71, 81), lesdites parties polaires (71, 81) présentant chacune un bord (72, 82), les bords respectifs de chaque partie du circuit magnétique étant en regard l'un de l'autre et parallèles entre eux, la partie aimantée (2) ayant, dans le sens de sa rotation, deux extrémités dont les bords respectifs (21, 22) coïncident essentiellement, dans les positions extrêmes correspondantes de la partie mobile (1), avec les bords respectifs (72, 73, 82, 83) desdites parties polaires (71, 81).

3. Dispositif d'entraînement selon la revendication 1, **caractérisé en ce que** l'organe mobile (23, 24, 25, 40) est rotatif et monté sur un axe (30) logé dans la structure statorique (26, 27), la ou les parties aimantées (23, 24, 25) ayant essentiellement la forme d'un secteur de disque plat annulaire et étant disposée dans un plan perpendiculaire à l'axe de rotation (30) de l'organe mobile, la structure statorique comportant au moins deux premières parties de circuit magnétique en forme de U (16, 17) disposées d'un même côté du plan de la partie aimantée, et **en ce qu'**une branche d'une desdites deux premières parties de circuit en forme de U (16, 17) est voisine d'une branche de l'autre desdites deux premières parties de circuit et lesdites branches sont couplées avec une même bobine électrique d'excitation (15), les extrémités de ces branches voisines étant réunies par une même pièce polaire (18).

4. Dispositif d'entraînement selon la revendication 3, **caractérisé en ce que** lesdites parties en forme de U (16, 17) sont constituées par des paquets de tôles en forme de U.

5. Dispositif d'entraînement électromagnétique selon l'une des revendications précédentes, **caractérisé en ce qu'**un courant de polarisation permanent est appliqué à ladite ou auxdites bobines de façon à régler le point de fonctionnement moyen de la ou des parties aimantées à une valeur de l'induction approximativement égale à zéro.

## Patentansprüche

1. Elektromagnetische Antriebsvorrichtung mit einer Statorstruktur (5) und einem beweglichen Element (1) mit einem oder mehreren Teilen (2), die senkrecht zu ihrer Bewegungsrichtung magnetisiert sind, wobei der oder die magnetisierten Teile (2) aus einem Material bestehen, das eine reversible Permeabilität nahe der von Luft und über den gesamten Arbeitsbereich der Antriebsvorrichtung eine praktisch lineare Entmagnetisierungskennlinie sowie eine mit dieser Kennlinie praktisch zusammenfallende Rücklaufgerade besitzt, wobei die Statorstruktur (5) zumindest einen ersten Teil eines magnetischen Kreises (6, 7, 8) besitzt, der aus einem Material hoher magnetischer Permeabilität gefertigt ist, wobei dieser erste Teil oder diese ersten Teile des Kreises je zwei polare Teile (71, 81) aufweisen, die Statorstruktur (5) ausserdem zumindest eine elektrische Erregerspule (12) umfasst, die mit einem ersten Teil des magnetischen Kreises gekoppelt ist, das bewegliche Element (1) oder die Statorstruktur (5) zumindest einen zweiten. Teil eines magnetischen Kreises (4) besitzt, der aus einem Material hoher magnetischer Permeabilität gefertigt und so angeordnet ist, dass er mit jedem der benannten polaren Teile (71, 81) einen Luftspalt bildet, wobei alle diese Luftspalte die gleiche, im Wesentlichen konstante Länge gemessen senkrecht zu den Oberflächen der polaren Teile haben, der benannte erste und zweite Teil des Kreises zusammen einen oder mehrere geschlossene magnetische Kreise bildet und die Antriebsvorrichtung so eingerichtet ist, dass sie eine Bewegung des oder der magnetisierten Teile (2) über die benannten Luftspalte zulässt, wobei jeder dieser magnetisierten Teile (2) eine in der Magnetisierungsrichtung gemessen im Wesentlichen konstante Länge hat, die kleiner als die Länge jedes Luftspalts von der Grösse des mechanischen Spiels ist, um die Bewegung des beweglichen Elements zu erlauben, wobei jeder magnetisierte Teil des beweglichen Elements eine Breite hat, die die Summe der Breite eines polaren Teils und der Breite des Zwischenraumes zwischen zwei polaren Teilen ein und desselben magnetischen Kreises nicht überschreitet, wobei alle diese Längen in der Richtung der benannten Bewegung gemessen werden, **dadurch gekennzeichnet, dass** alle magnetisierten Teile des beweglichen Elements in der gleichen Richtung magnetisiert sind, dass das Material des oder der magnetisierten Teile bis zu Temperaturen von mindestens 100 °C und mindestens bis zu einem negativen Wert der magnetischen Induktion von (als Absolutwert) im Wesentlichen 0,5-mal der remanenten Induktion des benannten Materials eine praktisch lineare Entmagnetisierungskennlinie hat, und dass der oder die benannten magnetischen Kreise und der oder die magnetisierten Teile so bemessen sind, dass der mittlere Betriebspunkt jedes magnetisierten Teils in Abwesenheit eines Stromes durch die Spule(n) bei einem Induktionswert von weniger als 0,5-mal dem Wert der remanenten Induktion liegt.

2. Antriebsvorrichtung nach Anspruch 1, **dadurch gekennzeichnet, dass** das bewegliche Element drehbar ist, eine begrenzte Auslenkung hat und auf eine Achse (3) montiert ist, die in der Statorstruktur (5) untergebracht ist, wobei der magnetisierte Teil (2) des beweglichen Elements (1) im Wesentlichen die Gestalt eines Teils einer flachen Ringscheibe hat und in einer Ebene senkrecht zur Drehachse (3) des beweglichen Elements angeordnet ist, der oder die ersten Teile des magnetischen Kreises die Gestalt eines U (6, 7, 8) haben, dessen Enden die polaren Teile (71, 81) bilden, wobei die benannten polaren Teile (71, 81) je einen Rand (72, 82) aufweisen, die betreffenden Ränder jedes Teils des magnetischen Kreises einander gegenüber liegen und parallel zueinander sind und der magnetisierte Teil (2) in seiner Drehrichtung zwei Enden hat, deren jeweilige Ränder (21, 22) in den entsprechenden Extremstellungen des beweglichen Elements (1) im Wesentlichen mit den entsprechenden Rändern (72, 73, 82, 83) der benannten polaren Teile (71, 81) zusammenfallen.

3. Antriebsvorrichtung nach Anspruch 1, **dadurch gekennzeichnet, dass** das bewegliche Element (23, 24, 25, 40) drehbar und auf eine Achse (30) montiert ist, die in der Statorstruktur (26, 27) untergebracht ist, wobei der oder die magnetisierten Teile (23, 24, 25) im Wesentlichen die Gestalt eines Sektors einer flachen Ringscheibe besitzen und in einer Ebene senkrecht zur Drehachse (30) des beweglichen Elements angeordnet sind, die Statorstruktur zumindest zwei erste Teile des magnetischen Kreises in Gestalt eines U (16, 17) umfasst, die auf der gleichen Seite der Ebene des magnetisierten Teils angeordnet sind, und dadurch, dass ein Zweig eines der benannten zwei ersten Teile des Kreises in Gestalt eines U (16, 17) an einen Zweig des anderen der benannten zwei ersten Teile des Kreises angrenzt und die benannten Zweige mit ein und derselben elektrischen Erregerspule (15) gekoppelt sind, wobei die Enden dieser benachbarten Zweige durch ein und denselben Polschuh (18) vereinigt werden.

4. Antriebsvorrichtung nach Anspruch 3, **dadurch gekennzeichnet**, das die benannten Teile in Gestalt eines U (17, 17) aus Lamellenbündeln in Gestalt eines U bestehen.

5. Elektromagnetische Antriebsvorrichtung nach einem der vorangehenden Ansprüche, **dadurch gekennzeichnet, dass** ein permanenter Polarisationsstrom so an die benannte(n) Spule(n) angelegt wird, dass der mittlere Betriebspunkt des oder der magnetisierten Teile auf einen Induktionswert von ungefähr null eingestellt wird.

## Claims

1. Electromagnetic drive device with a stator structure (5) and a mobile element (1) having one or several parts (2) magnetized normal to their direction of displacement, where the magnetized parts) (2) are made of a material having a reversible permeability close to that of air and, throughout the working range of the drive device, a practically linear demagnetization characteristic and a recoil line that practically coincides with this characteristic, where the stator structure (5) comprises at least a first part of a magnetic circuit (6, 7, 8) made of a material with high magnetic permeability, this first part or these first parts of the circuit each exhibiting two polar parts (71, 81), the stator structure (5) in addition comprising at least one electric excitation coil (12) coupled with a first part of the magnetic circuit, the mobile element (1) or the stator structure (5) comprising at least one second part of a magnetic circuit (4) made of a material of high magnetic permeability and so arranged as to form with each of said polar parts (71, 81) an air gap where all these air gaps have the same, essentially constant lengths as measured normal to the surfaces of the polar parts, the said first and second circuit part together forming one or several closed magnetic circuits, where the drive device is so arranged as to allow the magnetized part(s) (2) to be moved across said air gaps, these magnetized parts (2) each having a length measured in the direction of magnetization that is essentially constant and smaller than the length of each air gap, of the extent of mechanical clearance so as to allow the mobile element to move, each magnetized part of the mobile element having a width not exceeding the sum of the width of one polar part and the width of the space between two polar parts of one and the same magnetic circuit, where all these widths are measured in the direction of said movement, **characterized in that** all the magnetized parts of the mobile element are magnetized in the same direction, that the material of the magnetized part(s) has a practically linear demagnetization characteristic up to temperatures of at least 100 °C and at least up to a negative value of the magnetic induction that in absolute value is essentially equal to 0.5 times the remanent induction of said material, and that said magnetic circuit(s) and the magnetized part(s) have dimensions such that the mean operating point of each magnetized part in the absence of current through the coil(s) is located at a value of induction lower than 0.5 times the value of remanent induction.

2. Drive device according to claim 1, **characterized in that** the mobile element is rotating with a limited excursion, and mounted on an axle (3) housed in the stator structure (5), the magnetized part (2) of the mobile element (1) essentially having the shape of a portion of flat annular disk and being arranged in a plane perpendicular to the axis of rotation (3) of the mobile element, the first parts) of the magnetic circuit have the shape of a U (6, 7, 8) the ends of which form the polar parts (71, 81), said polar parts (71, 81) each exhibiting an edge (72, 82), the respective edges of each part of the magnetic circuit being parallel to and facing each other, where the magnetized part (2) in the direction of its rotation has two ends the respective edges of which (21, 22) at the corresponding extreme positions of the mobile element (1) essentially coincide with the corresponding edges (72, 73, 82, 83) of said polar parts (71, 81).

3. Drive device according to claim 1, **characterized in that** the mobile element (23, 24, 25, 40) is rotating and mounted on an axle (3) housed in the stator structure (26, 27), the magnetized part(s) (23, 24, 25) essentially having the shape of a sector of an annular flat disk and being arranged in a plane perpendicular to the axis of rotation (30) of the mobile element, the stator structure comprising at least two first parts of a magnetic circuit in the shape of a U (16, 17) arranged on the same side of the plane of the magnetized part, and **in that** one branch of one of said two first circuit parts in the shape of a U (16, 17) is neighbor to a branch of the other of said two first circuit parts, and these branches are coupled with one and the same electric excitation coil (15) while the ends of these neighboring branches are united by one and the same pole piece (18).

4. Drive device according to claim 3, **characterized in that** said parts in the shape of a U (16, 17) consist of laminations in the shape of a U.

5. Electromagnetic drive device according to one of the preceding claims, **characterized in that** a permanent polarizing current is applied to said coil(s) so as to adjust the mean operating point of the magnetized part(s) to a value of induction approximately equal to zero.
